# EUROPEAN PATENT APPLICATION

(11) **EP 4 765 455 A1**
(43) Date of publication of application: **24.06.2026**
(21) Application number: 25827146.9
(22) Date of filing: 11.03.2025
(51) Int. Cl.: H01M 50/538

(54) **CURRENT COLLECTOR, AND BATTERY CELL, BATTERY PACK AND VEHICLE INCLUDING SAME**

(30) Priority: 26.06.2024 KR 20240083964; 06.03.2025 KR 20250029163
(71) Applicant: LG Energy Solution, Ltd., Seoul 07335 (KR)
(72) Inventor: HWANG, Dong-Sung, Daejeon 34122 (KR); KO, Kwang-Hun, Daejeon 34122 (KR); KIM, Do-Gyun, Daejeon 34122 (KR); KIM, Geon-Guk, Daejeon 34122 (KR); CHOI, Hyeon-Woo, Daejeon 34122 (KR)
(74) Representative: Goddar, Heinz J.
(86) International application number: PCT/KR2025/003209
(87) International publication number: WO 2026/005181

(57) **Abstract**

A battery cell according to one embodiment of the present disclosure includes an electrode assembly in which a first electrode, a second electrode, and a separator interposed therebetween are wound around a winding axis, wherein the first electrode includes a first uncoated portion that is not coated with an active material layer at a long side end along the winding direction and is exposed to the outside of the separator, and at least a part of the first uncoated portion is used as an electrode tab in itself; a battery housing including an opening on one side and configured to accommodate the electrode assembly through the opening; a cell terminal configured to pass through a surface positioned on an opposite side of the opening of the battery housing; and a current collector including a first uncoated portion coupling part disposed on one side of the electrode assembly and configured to be welded to the first uncoated portion, a terminal coupling part spaced apart from the first uncoated portion coupling part and configured to be welded to the cell terminal, and a connection area provided between the first uncoated portion coupling part and the terminal coupling part, wherein the connection area includes a plurality of slits spaced apart at regular intervals in the circumferential direction and having a convex shape toward an inner side in the radial direction.

## Description

### TECHNICAL FIELD

The present disclosure relates to a current collector and a battery cell including the same, a battery pack, and a vehicle.

This application is based on and claims priority from Korean Patent Application No. 10-2024-0083964, filed on June 26, 2024 and Korean Patent Application No. 10-2025-0029163, filed on March 6, 2025, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of the unit secondary battery cell, namely a unit battery cell, is about 2.5 V to 4.5 V. Therefore, when a higher output voltage is required, a plurality of battery cells may be connected in series to form a battery pack. Additionally, depending on the charging and discharging capacity required for the battery pack, a plurality of battery cells may be connected in parallel to form a battery pack. Therefore, the number of battery cells included in the battery pack may be variously set according to the required output voltage and/or the demanded charging and discharging capacity.

Meanwhile, the positive electrode current collector plate structure included in the conventional cylindrical battery designed a current path toward the edge of the current collector plate to secure fluidity between the positive electrode branch welded portion and the terminal welded portion. Accordingly, the length of the current path became longer, which had the problem of increasing the internal resistance of the battery.

### DISCLOSURE

### Technical Problem

The present disclosure is directed to providing a battery cell having a low resistance structure through a curved slit structure.

Additionally, the present disclosure is directed to securing fluidity in the winding axis direction through a current collector structure including a plurality of slits.

Furthermore, the present disclosure is directed to securing a welding area between a current collector and an uncoated portion at a certain level or more.

However, technical problems to be solved by the present disclosure are not limited to the above-described problems, and other problems not mentioned herein may be clearly understood by those having ordinary skill in the art from the following description of the present disclosure.

### Technical Solution

A battery cell according to one embodiment of the present disclosure for solving the above-described problems includes an electrode assembly in which a first electrode, a second electrode, and a separator interposed therebetween are wound around a winding axis to define a core and an outer circumferential surface, wherein the first electrode includes a first uncoated portion that is not coated with an active material layer at a long side end along the winding direction and is exposed to the outside of the separator, and at least a part of the first uncoated portion is used as an electrode tab in itself; a battery housing including an opening on one side and configured to accommodate the electrode assembly through the opening; a cell terminal configured to pass through a surface positioned on an opposite side of the opening of the battery housing; and a current collector including a first uncoated portion coupling part disposed on one side of the electrode assembly and configured to be welded to the first uncoated portion, a terminal coupling part spaced apart from the first uncoated portion coupling part and configured to be welded to the cell terminal, and a connection area provided between the first uncoated portion coupling part and the terminal coupling part, wherein the connection area includes a plurality of slits spaced apart at regular intervals in the circumferential direction and having a convex shape toward an inner side in the radial direction.

In one aspect of the present disclosure, the first uncoated portion coupling part may be configured to be spaced apart at regular intervals along the circumferential direction.

In another aspect of the present disclosure, the first uncoated portion coupling part may form a ring-shaped area having a predetermined thickness.

In still another aspect of the present disclosure, the slit may include a first line extending from one end toward the terminal coupling part; and a second line extending from the first line toward the first uncoated portion coupling part.

Preferably, the slit may be configured to change its extension direction at a point where the first line and the second line meet.

For example, the slit may be configured to have a convex shape toward an inner side in the radial direction at the point where the first line and the second line meet.

In one aspect of the present disclosure, one end of the slit may be configured to pass through an imaginary first concentric circle centered on the center of the current collector.

In another aspect of the present disclosure, the point where the first line and the second line meet may be configured to pass through an imaginary second concentric circle centered on the center of the current collector and having a smaller radius than the first concentric circle.

In still another aspect of the present disclosure, the other end of the slit may be configured to pass through an imaginary third concentric circle centered on the center of the current collector and having a larger radius than the first concentric circle.

In one aspect of the present disclosure, the first concentric circle may be configured to coincide with a boundary point of the terminal coupling part and the connection area.

In another aspect of the present disclosure, the third concentric circle may be configured to coincide with a boundary point of the first uncoated portion coupling part and the connection area.

In still another aspect of the present disclosure, the connection area may include a first slit and a second slit spaced apart from the first slit by a predetermined distance, and may include a bridge portion provided in an area between the first slit and the second slit.

Meanwhile, the present disclosure provides a battery pack including at least one battery cell according to the above-described embodiment; and a pack housing accommodating the plurality of battery cells.

In addition, the present disclosure provides a vehicle including at least one battery pack according to the above-described embodiment.

Meanwhile, the present disclosure provides a current collector, which is applied to a battery cell including an electrode assembly having a first uncoated portion and a second uncoated portion, a battery housing accommodating the electrode assembly through an opening formed on one side and electrically connected to the second uncoated portion, and a cell terminal electrically connected to the first uncoated portion, the current collector including a first uncoated portion coupling part disposed on one side of the electrode assembly and configured to be welded to the first uncoated portion; a terminal coupling part spaced apart from the first uncoated portion coupling part and configured to be welded to the cell terminal; and a connection area provided between the first uncoated portion coupling part and the terminal coupling part, wherein the connection area includes a plurality of slits spaced apart at regular intervals in the circumferential direction and having a convex shape toward an inner side in the radial direction.

### Advantageous Effects

According to the present disclosure, there may be provided a battery cell having a low resistance structure.

Additionally, according to the present disclosure, the fluidity of the current collector in the winding axis direction may be secured.

Furthermore, according to the present disclosure, a welding area between the current collector and the uncoated portion may be secured at a certain level or more. Accordingly, welding quality may be improved.

However, the effects to be obtained by the present disclosure are not limited to the above-described effects, and other effects not mentioned herein may be clearly understood by those having ordinary skill in the art from the following description of the present disclosure.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is a view showing the appearance of a battery cell according to one embodiment of the present disclosure.
FIG. 2 is a cross-sectional view showing the internal structure of a battery cell according to one embodiment of the present disclosure.
FIG. 3 is a view for describing an electrode assembly, a cell terminal, and a current collector included in the battery cell of FIG. 1.
FIG. 4 is a view for describing a conventional current collector.
FIG. 5 is a view for describing a current collector according to one embodiment of the present disclosure.
FIG. 6 is a view for describing a current collector according to another embodiment of the present disclosure.
FIG. 7 is a view for describing a current collector according to still another embodiment of the present disclosure.
FIG. 8 is a view for describing a shape in which a current collector according to one embodiment of the present disclosure is welded to an electrode assembly.
FIG. 9 is a view for describing a battery pack including a battery cell according to one embodiment of the present disclosure.
FIG. 10 is a view for describing a vehicle including the battery pack of FIG. 9.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments described in this specification and the configurations shown in the drawings are only some of the most preferred embodiments of the present disclosure, not intended to entirely represent the technical aspects of the present disclosure, so it should be understood that various equivalents and modifications may be made thereto at the time of filing the present application.

Additionally, to help understanding of the present disclosure, the accompanying drawings are not drawn to actual scale, but dimensions of some components may be exaggerated. Additionally, the same reference numeral may be assigned to the same component in different embodiments.

A statement that two objects of comparison are identical means 'substantially identical'. Therefore, 'substantially identical' may include deviations considered to be low in the art, for example, deviations within 5%. Additionally, uniformity of a certain parameter in a predetermined area may mean that it is uniform in terms of an average.

Although the first, second, and the like are used to describe various components, it is obvious that these components are not limited by these terms. These terms are used only to distinguish one component from another component, and unless expressly stated to the contrary, it is obvious that the first component may be the second component.

As used herein, unless expressly stated to the contrary, each component may be singular or plural.

Placing any component on the "upper (or lower)" of a component or "top (or bottom)" of a component may mean not only that any component is disposed in contact with the top surface (or bottom surface) of the component, but also that other components may be interposed between the component and any component disposed above (or below) the component.

Additionally, when it is described that a component is "linked", "coupled", or "connected" to another component, the components may be directly linked or connected to each other, but it should be understood that still another component may be "interposed" between each component, or each component may be "linked", "coupled", or "connected" through still another component.

As used herein, when referring to "A and/or B", it means A, B or A and B, unless expressly stated to the contrary, and when referring to "C to D", it means C or more and D or less, unless expressly stated to the contrary.

For convenience of description, the direction along the longitudinal direction of the winding axis of the electrode assembly 10 wound in the form of a jelly roll is referred to as the axial direction in this specification. And, the direction surrounding the winding axis is referred to as the circumferential direction or the perimeter direction. And, the direction approaching or moving away from the winding axis is referred to as the radial direction. In particular, the direction approaching the winding axis is referred to as the centripetal direction, and the direction moving away from the winding axis is referred to as the centrifugal direction.

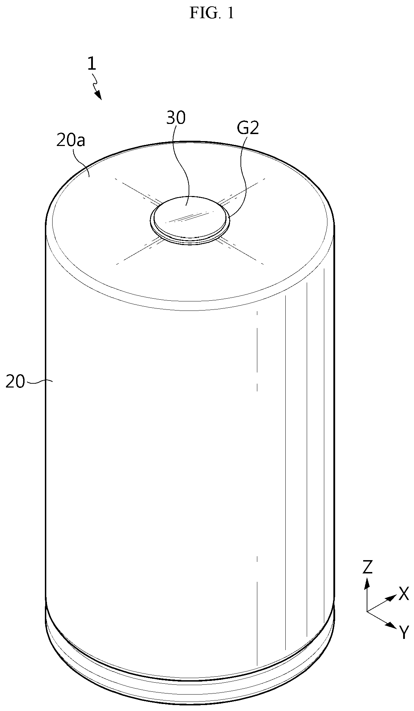

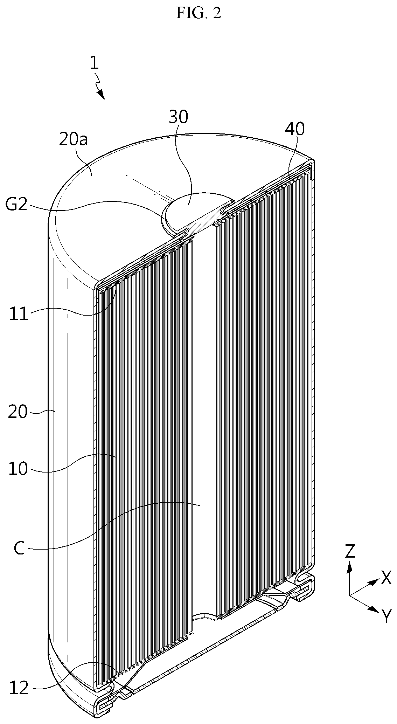

FIG. 1 is a view showing the appearance of a battery cell 1 according to one embodiment of the present disclosure, and FIG. 2 is a cross-sectional view showing the internal structure of a battery cell 1 according to one embodiment of the present disclosure.

Referring to FIGS. 1 and 2, a battery cell 1 according to one embodiment of the present disclosure includes an electrode assembly 10, a battery housing 20, a cell terminal 30, and a current collector 40. The battery cell 1 may further include an insulating gasket G2 and/or an insulator 50 in addition to the components described above.

Referring to FIG. 2, the electrode assembly 10 includes a first electrode having a first polarity, a second electrode having a second polarity, and a separator interposed between the first electrode and the second electrode. The first electrode is a positive electrode or a negative electrode, and the second electrode corresponds to an electrode having a polarity opposite to that of the first electrode.

The electrode assembly 10 may have, for example, a jelly-roll structure. That is, the electrode assembly 10 may be manufactured by winding a stack formed by stacking a first electrode plate and a second electrode plate having a sheet shape at least once with a separator interposed therebetween, in one direction based on the winding center C. In this case, an additional separator may be provided on the outer circumferential surface of the electrode assembly 10 for insulation from the battery housing 20. Any jelly-roll structure known in the art may be applied to the present disclosure without limitation.

The first electrode includes a first electrode plate and a first electrode active material applied onto one or both surfaces of the first electrode plate. At one end of the first electrode plate in the width direction (direction parallel to the Z-axis), there is an uncoated portion where the first electrode active material is not applied. The uncoated portion functioning as a first electrode tab is referred to as the first uncoated portion 11 hereinafter. The first uncoated portion 11 is provided on the upper part of the electrode assembly 10 accommodated in the battery housing 20 in the height direction (direction parallel to the Z-axis). That is, the first electrode plate includes the first uncoated portion 11 that is not coated with an active material layer at a long side end and is exposed to the outside of the separator, and a part of the first uncoated portion 11 is used as an electrode tab in itself. The first uncoated portion 11 may be, for example, a positive electrode tab.

Meanwhile, at least a part of the first uncoated portion 11 may include a plurality of segmented pieces 11a divided along the winding direction of the electrode assembly 10. In this case, the plurality of segmented pieces 11a may be bent along the radial direction of the electrode assembly 10. The plurality of bent segmented pieces 11a may be overlapped in multiple layers. In this case, a first uncoated portion coupling part 41 to be described later may be coupled to an area where the plurality of segmented pieces 11a are overlapped in multiple layers.

The second electrode includes a second electrode plate and a second electrode active material applied onto one or both surfaces of the second electrode plate. At the other end of the second electrode plate in the width direction (direction parallel to the Z-axis), there is an uncoated portion where the second electrode active material is not applied. The uncoated portion functioning as a second electrode tab is referred to as the second uncoated portion 12 hereinafter. The second uncoated portion 12 is provided on the lower part of the electrode assembly 10 accommodated in the battery housing 20 in the height direction (direction parallel to the Z-axis). That is, the second electrode plate includes the second uncoated portion 12 that is not coated with an active material layer at a long side end and is exposed to the outside of the separator, and at least a part of the second uncoated portion 12 is used as an electrode tab in itself. The second uncoated portion 12 may be, for example, a negative electrode tab.

Meanwhile, at least a part of the second uncoated portion 12 may include a plurality of segmented pieces 11a divided along the winding direction of the electrode assembly 10. In this case, the plurality of segmented pieces 11a may be bent along the radial direction of the electrode assembly 10. The plurality of bent segmented pieces 11a may be overlapped in multiple layers. In this case, the second current collector may be coupled to an area where the plurality of segmented pieces 11a are overlapped in multiple layers.

The first uncoated portion 11 and the second uncoated portion 12 extend in opposite directions along the height direction (direction parallel to the Z-axis) of the battery cell 1. The first uncoated portion 11 extends toward the closed portion of the battery housing 20, and the second uncoated portion 12 extends toward the opening of the battery housing 20.

In the present disclosure, the positive electrode active material coated on the positive electrode plate and the negative electrode active material coated on the negative electrode plate may be used without limitation as long as they are active materials known in the art.

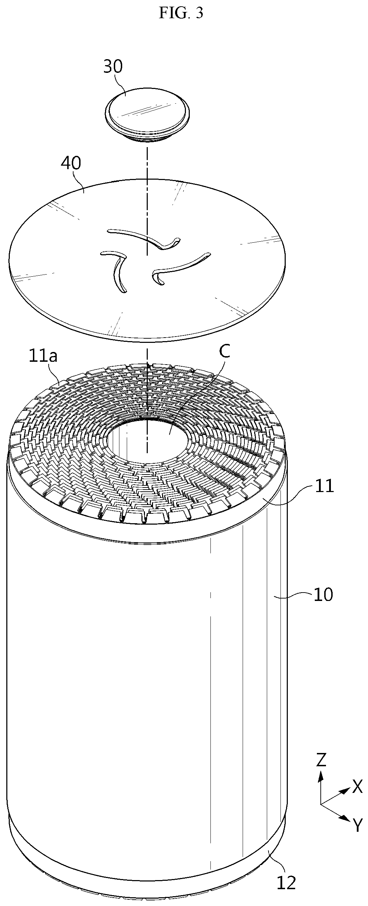

FIG. 3 is a view for describing an electrode assembly 10, a cell terminal 30, and a current collector 40 included in the battery cell 1 of FIG. 1.

Referring to FIG. 3, the structure of the electrode assembly 10 will be described in more detail. In the following description, the first electrode among the first electrode and the second electrode described above will be described as an example, but the structure of the first electrode may be equally applicable to the second electrode.

Preferably, the first uncoated portion 11 may include a plurality of notched segmented pieces 11a. The plurality of segmented pieces 11a form a plurality of groups, and the segmented pieces 11a belonging to each group may have substantially the same height (length in the Z direction) and/or width (length in the X direction) and/or spacing pitch. The number of segmented pieces 11a belonging to each group may be increased or decreased compared to the illustrated number.

The uncoated portions 11, 12 may be bent along the radial direction of the electrode assembly 10, for example, from the outer circumference side to the core side. When the uncoated portions 11, 12 are bent, the segmented pieces 11a that are adjacent in the radial direction overlap each other in multiple layers to form bent surfaces on the upper and lower parts of the electrode assembly 10.

Referring to FIGS. 1 and 2, the battery housing 20 may be configured to include an opening on one side and accommodate the electrode assembly 10 through the opening.

Specifically, the battery housing 20 is a roughly cylindrical receptacle with an opening formed at the bottom, and is made of a conductive material such as metal, for example. The material of the battery housing 20 may include, for example, steel, stainless steel, nickel-plated iron, or the like. The upper surface positioned opposite to the opening is referred to as a closed portion. The side wall portion and the closed portion of the battery housing 20 may be formed integrally. Alternatively, the side wall portion and the closed portion of the battery housing 20 may be provided separately from each other and then be coupled to each other by welding or the like. The upper surface (a surface parallel to the X-Y plane) of the battery housing 20, that is, the outer surface of the closed portion, may have a roughly flat shape. The battery housing 20 accommodates the electrode assembly 10 through the opening formed at the bottom and accommodates an electrolyte, as well.

The battery housing 20 is electrically connected to the electrode assembly 10. The battery housing 20 is electrically connected to, for example, the second uncoated portion 12 of the electrode assembly 10. In this case, the battery housing 20 has the same polarity as the second uncoated portion 12.

Referring to FIGS. 1 to 3, the cell terminal 30 is made of a conductive metal material. The material of the cell terminal 30 may be, for example, aluminum (Al). When the material of the cell terminal 30 is aluminum, processing may be facilitated during rivet processing. The cell terminal 30 may be made of 10 series aluminum having relatively low electrical resistance.

The cell terminal 30 passes through the upper surface of the battery housing 20, that is, the surface (surface parallel to the X-Y plane) positioned on the opposite side of the opening of the battery housing 20. The cell terminal 30 is electrically connected to, for example, the first uncoated portion 11 of the electrode assembly 10. In this case, the cell terminal 30 has a first polarity. Therefore, the cell terminal 30 may function as a first electrode terminal in the battery cell 1 of the present disclosure.

When the cell terminal 30 has the first polarity in this way, the cell terminal 30 is electrically insulated from the battery housing 20 having the second polarity. Electrical insulation between the cell terminal 30 and the battery housing 20 may be realized in various ways. For example, insulation may be realized by interposing an insulating gasket G2 between the cell terminal 30 and the battery housing 20. Alternatively, insulation may be realized by forming an insulating coating layer on a part of the cell terminal 30. Alternatively, there may be applied a method of structurally firmly fixing the cell terminal 30 to make the contact between the cell terminal 30 and the battery housing 20 impossible. Alternatively, a plurality of methods among the methods described above may be applied together. The cell terminal 30 may be riveted to the closed portion of the battery housing 20.

Referring to FIGS. 2 and 3, the coupling between the bottom surface of the center area of the cell terminal 30 and the current collector 40 may be achieved, for example, by laser welding, spot welding, or ultrasonic welding.

The welding may be achieved by irradiating a laser through a hole formed in the winding center C of the electrode assembly 10 or by inserting a tool for ultrasonic welding or spot welding to form a welding bead on one surface of the current collector 40 (a surface facing the hole formed in the winding center C of the electrode assembly 10).

According to this structure, the battery cell 1 according to one embodiment of the present disclosure may ensure a smooth current flow at a coupling part of the current collector 40 and the cell terminal 30 when a large amount of current flows due to fast charging, thereby bringing effects of shortening the charging time, reducing the amount of heat generated, and the like.

Meanwhile, the insulating gasket G2 may be interposed between the outer surface 20a of the closed portion of the battery housing 20 and the cell terminal 30. The insulating gasket G2 may be made of, for example, a resin material having insulation and elasticity. Therefore, the insulating gasket G2 may electrically insulate the battery housing 20 from the cell terminal 30.

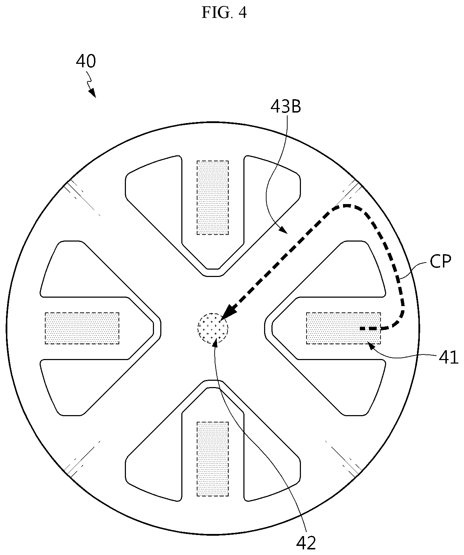

FIG. 4 is a view for describing a conventional current collector.

Referring to FIG. 4, in the conventional current collector, the first uncoated portion coupling part 41 and the terminal coupling part 42 are indirectly connected through the bridge portion 43B via the edge portion of the current collector 40. That is, the current flows from the first uncoated portion coupling part 41 to the terminal coupling part 42 through the bridge portion 43B via the edge portion.

According to this structure, the current path is configured through the outside of the current collector, thereby increasing its length. As a result, the internal resistance of the battery increases. Additionally, according to the above structure, the area available for coupling to the first uncoated portion 11 is narrow and limited. Therefore, according to the conventional current collector, there was a problem of being difficult to avoid an increase in internal resistance because the welding area between the first uncoated portion 11 and the current collector 40 was limited.

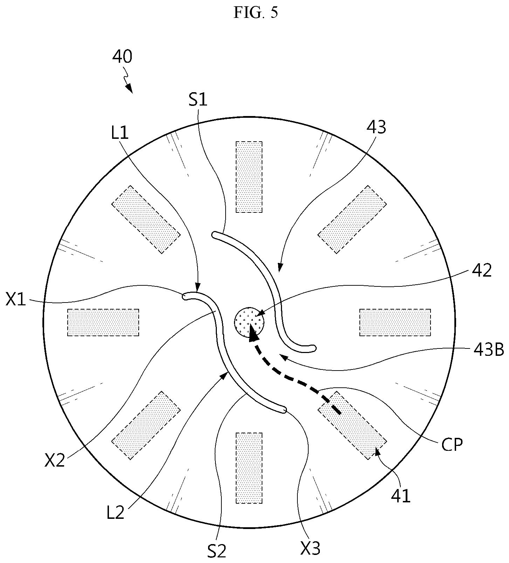

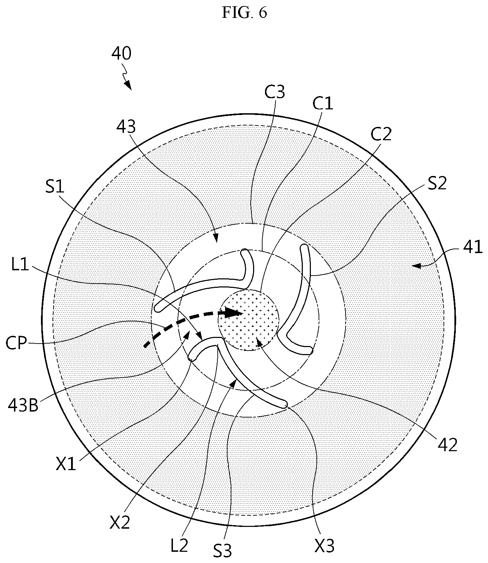

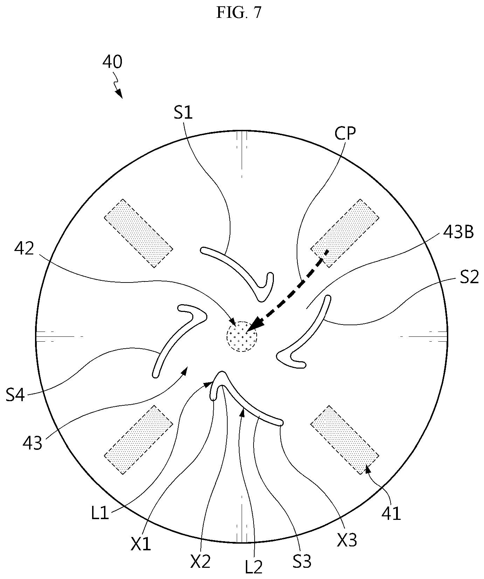

FIG. 5 is a view for describing a current collector 40 according to one embodiment of the present disclosure, and FIG. 6 is a view for describing a current collector 40 according to another embodiment of the present disclosure. FIG. 7 is a view for describing a current collector 40 according to still another embodiment of the present disclosure.

Referring to FIG. 3 and FIGS. 5 to 7, the current collector 40 is coupled to the upper part of the electrode assembly 10. The current collector 40 is made of a conductive metal material and is connected to the first uncoated portion 11. More specifically, the current collector 40 may be welded to the upper part of the electrode assembly 10. The current collector 40 is made of a conductive metal material. The material of the current collector 40 may be, for example, aluminum (Al). For example, the current collector 40 may include Al1100-H14 material. The current collector 40 electrically connects the first uncoated portion 11 of the electrode assembly 10 to the cell terminal 30.

The current collector 40 may be welded onto a coupling surface (bent surface) formed by bending an end of the first uncoated portion 11 in a direction parallel to the current collector 40. The bending direction of the first uncoated portion 11 may be the radial direction of the electrode assembly 10. The bending direction of the first uncoated portion 11 may be, for example, a direction toward the winding center C of the electrode assembly 10. When the first uncoated portion 11 has a bent shape like this, the space occupied by the first uncoated portion 11 is reduced, which may lead to an improvement in energy density. Additionally, due to an increase in the coupling area between the first uncoated portion 11 and the current collector 40, there may be effects of improving the coupling force and reducing the contact resistance.

Referring to FIG. 3 again, at least a part of the first uncoated portion 11 and/or the second uncoated portion 12 may include a plurality of segmented pieces 11a divided along the winding direction of the electrode assembly 10. In this case, the plurality of segmented pieces 11a may be bent along the radial direction of the electrode assembly 10. The plurality of bent segmented pieces 11a may be overlapped in multiple layers. In this case, the first uncoated portion coupling part 41 of the current collector 40 to be described later may be coupled to an area where the plurality of segmented pieces 11a are overlapped in multiple layers.

Referring to FIGS. 5 to 7 again, the current collector 40 includes a first uncoated portion coupling part 41, a terminal coupling part 42, and a connection area 43.

The first uncoated portion coupling part 41 may be disposed on one side of the electrode assembly 10. For example, referring to FIG. 2, the first uncoated portion coupling part 41 may be coupled to a surface on which the first uncoated portion 11 is positioned among both axial surfaces of the electrode assembly 10.

The first uncoated portion coupling part 41 is welded to the first uncoated portion 11. At this time, a welded portion may be provided between the first uncoated portion coupling part 41 and the first uncoated portion 11.

In one aspect of the present closure, referring to FIG. 5, the first uncoated portion coupling part 41 may be configured to be spaced apart at regular intervals along the circumferential direction. That is, the first uncoated portion coupling part 41 may be freely provided within a ring-shaped area having a predetermined thickness. For example, in the embodiment of FIG. 5, a plurality of first uncoated portion coupling parts 41 having a roughly rectangular shape are disposed at intervals of about 45 degrees.

In another embodiment of the present disclosure, referring to FIG. 6, the first uncoated portion coupling part 41 may form a ring-shaped area having a predetermined thickness. For example, when the current collector 40 is configured in a roughly disk shape, the first uncoated portion coupling part 41 may be configured in a roughly donut shape. At this time, welding may be performed continuously in an area having the donut shape.

Preferably, the area of the first uncoated portion coupling part 41 may be configured to be about 60 to 80% of the total area of the current collector 40. More preferably, the area of the first uncoated portion coupling part 41 may be configured to be about 75% of the total area of the current collector 40.

According to the above configuration, the welding area may be secured at a certain level or more. Accordingly, the welding quality between the first uncoated portion 11 and the current collector 40 may be effectively improved. Accordingly, the internal resistance of the battery cell 1 may be effectively reduced. That is, according to the above configuration of the present disclosure, a low-resistance battery cell 1 may be implemented.

In another aspect of the present disclosure, the terminal coupling part 42 may be positioned to be spaced apart from the first uncoated portion coupling part 41. Specifically, the terminal coupling part 42 may be positioned to be spaced apart from the first uncoated portion coupling part 41 in the radial direction. Preferably, the terminal coupling part 42 may be positioned on the inner side of the first uncoated portion coupling part 41. The terminal coupling part 42 may be coupled to the cell terminal 30 by welding. The terminal coupling part 42 may have a diameter substantially equal to or larger than the diameter of the flat portion formed on the bottom surface of the cell terminal 30 in order to secure a welding area for being coupled to the flat portion formed on the bottom surface of the cell terminal 30. For example, the terminal coupling part 42 may form a circular area having a predetermined radius centered on the center of the current collector 40.

In still another aspect of the present disclosure, the current collector 40 may include a connection area 43 provided between the first uncoated portion coupling part 41 and the terminal coupling part 42.

Referring to FIG. 6, the connection area 43 may form a ring-shaped area having a predetermined thickness. When the current collector 40 is configured in a roughly disk shape, the connection area 43 may be configured in a roughly donut shape. At this time, the connection area 43 may be provided in a radially further inward side than the first uncoated portion coupling part 41. At the same time, the terminal coupling part 42 may be provided in a radially inward side of the connection area 43.

The first uncoated portion coupling part 41 and the terminal coupling part 42 may be electrically connected by the connection area 43. For example, the first uncoated portion coupling part 41 and the terminal coupling part 42 may be indirectly connected by the connection area 43. Accordingly, the first uncoated portion 11 may be electrically connected to the cell terminal 30 through the current collector 40.

In one aspect of the present disclosure, the connection area 43 may include a plurality of slits S spaced apart at regular intervals in the circumferential direction. For example, the connection area 43 may include at least two to four or more slits S. At this time, the plurality of slits S may be disposed point-symmetrically about the center of the current collector 40.

In another aspect of the present disclosure, the slit S may be configured to have a curved shape. Preferably, the slit S may be configured to have a convex shape toward the inner side in the radial direction. The slit S may be configured to extend continuously from one end to the other end, and may be configured as a curve having a convex shape in the radially inward direction. For example, referring to FIG. 5, the slit S may be configured as a curve having a roughly S shape.

According to this configuration, the current path between the first uncoated portion coupling part 41 and the terminal coupling part 42 may be shortened. Accordingly, the internal resistance of the battery may be effectively reduced. That is, according to the present disclosure, a low-resistance battery cell 1 may be configured. Additionally, according to the above configuration, even when the connection area 43 is relatively narrow, a plurality of slits S may be effectively disposed. Accordingly, the degree of freedom in the design of the current collector 40 may be improved. At the same time, according to the above configuration, the total upward fluidity of the current collector 40 may be effectively secured by the slit S. Furthermore, according to the above structure, the area of the first uncoated portion coupling part 41 may be expanded. Accordingly, the welding quality between the first uncoated portion and the current collector 40 may be improved, and at the same time, the internal resistance may be further reduced.

In still another aspect of the present disclosure, referring to FIG. 6, the slit S may include a first line L1 and a second line L2. The first line L1 may extend from one end toward the terminal coupling part 42. The first line L1 may be configured in a straight or curved shape. For example, the first line L1 may be configured in a curved shape convex toward the inner side in the radial direction.

The second line L2 may extend from the first line L1 toward the first uncoated portion coupling part 41. The second line L2 may be configured in a straight or curved shape. For example, the second line L2 may be configured in a curved shape convex toward the outer side in the radial direction.

Preferably, the slit S may be configured to change its extension direction at a point where the first line L1 and the second line L2 meet. The slit S may be configured to be bent at the point where the first line L1 and the second line L2 meet. Specifically, referring to FIG. 6, the slit S may be configured to have a convex shape toward the inner side in the radial direction at the point where the first line L1 and the second line L2 meet. That is, the slit S may have a shape in which the first line L1 and the second line L2 are coupled, and the first line L1 and the second line L2 may have a shape in which they are coupled to form a predetermined angle.

In another aspect of the present disclosure, referring to FIG. 6, it is possible to define an imaginary first concentric circle C1 centered on the center of the current collector 40. Additionally, it is possible to define an imaginary second concentric circle C2 centered on the center of the current collector 40 and having a smaller radius than the first concentric circle C1. Additionally, it is possible to define an imaginary third concentric circle C3 centered on the center of the current collector 40 and having a larger radius than the first concentric circle C1. At this time, the second concentric circle C2 may be included in the connection area 43.

Referring to FIG. 6 again, the first concentric circle C1 may be configured to coincide with a boundary point of the terminal coupling part 42 and the connection area 43. Alternatively, the first concentric circle C1 may be configured to be included inside the connection area 43. In another aspect of the present disclosure, the third concentric circle C3 may be configured to coincide with a boundary point of the first uncoated portion coupling part 41 and the connection area 43. Alternatively, the third concentric circle C3 may be configured to be included inside the connection area 43.

Referring to FIG. 6 again, one end of the slit S may be configured to pass through the imaginary first concentric circle C1 centered on the center of the current collector 40. At this time, the one end of the slit S may be included within the range of the connection area 43. Meanwhile, the point where the first line L1 and the second line L2 meet may be configured to pass through the imaginary second concentric circle C2. At this time, the point where the first line L1 and the second line L2 meet may be included within the range of the connection area 43. Meanwhile, the other end of the slit S may be configured to pass through the imaginary third concentric circle C3. At this time, the other end of the slit S may be included within the range of the connection area 43.

According to the structure of the present disclosure as described above, even when the connection area 43 is relatively narrow, a plurality of slits S may be effectively disposed. Accordingly, the degree of freedom in the design of the current collector 40 may be improved. At the same time, according to the above configuration, the total upward fluidity of the current collector 40 may be effectively secured by the slit S.

In one aspect of the present disclosure, referring to FIG. 5, the connection area 43 may include a first slit S1 and a second slit S2 spaced apart from the first slit S1 by a predetermined distance.

At this time, the connection area 43 may include a bridge portion 43B provided in an area between two adjacent slits S. For example, it may include a bridge portion 43B provided in an area between the first slit S1 and the second slit S2.

In another aspect of the present disclosure, the bridge portion 43B may form a current path. Referring to FIG. 5 again, current may flow from the terminal coupling part 42 to the first uncoated portion coupling part 41 along the bridge portion 43B. That is, the bridge portion 43B may be configured to connect the first uncoated portion coupling part 41 and the terminal coupling part 42.

Preferably, the bridge portion 43B may be provided in plurality. For example, each of the plurality of bridge portions 43B may be disposed between the first slit S1 and the second slit S2 that are adjacent to each other. Referring to FIG. 5, the bridge portions 43B may be disposed at intervals of about 180 degrees based on the center of the current collector 40. In this case, the bridge portions 43B may include two bridge portions. In this embodiment, the bridge portions 43B may be configured to face each other.

In another embodiment of the present disclosure, as shown in FIG. 7, when the connection area 43 includes the first slit S1 to the fourth slit S4, the bridge portion 43B may each be provided between the first slit S1 and the second slit S2, between the second slit S2 and the third slit S3, between the third slit S3 and the fourth slit S4, and between the fourth slit S4 and the first slit S1.

Referring to FIG. 6, the current collector 40 may include a first slit S1, a second slit S2 spaced apart from the first slit S1 by a predetermined distance, and a third slit S3 spaced apart from the second slit S2 by a predetermined distance. In this case, the first slit S1, the second slit S2, and the third slit S3 may be disposed at intervals of about 120 degrees along the circumferential direction based on the center of the current collector 40. That is, the first slit S1, the second slit S2, and the third slit S3 may be disposed to be spaced apart at equal intervals in the circumferential direction. In this embodiment, the bridge portions 43B may include three bridge portions.

Referring to FIG. 7, the current collector 40 may include a first slit S1, a second slit S2 spaced apart from the first slit S1 by a predetermined distance, a third slit S3 spaced apart from the second slit S2 by a predetermined distance, and a fourth slit S4 spaced apart from the third slit S3 by a predetermined distance. In this case, the first slit S1, the second slit S2, the third slit S3, and the fourth slit S4 may be disposed at intervals of about 90 degrees along the circumferential direction based on the center of the current collector 40. That is, the first slit S1, the second slit S2, the third slit S3, and the fourth slit S4 may be disposed to be spaced apart at equal intervals in the circumferential direction. In this embodiment, the bridge portions 43B may include four bridge portions.

The embodiments of the present disclosure have been described hereinabove with reference to FIGS. 5 to 7, but it is obvious that the number of slits S or the number of bridge portions 43B of the present disclosure is not limited thereto.

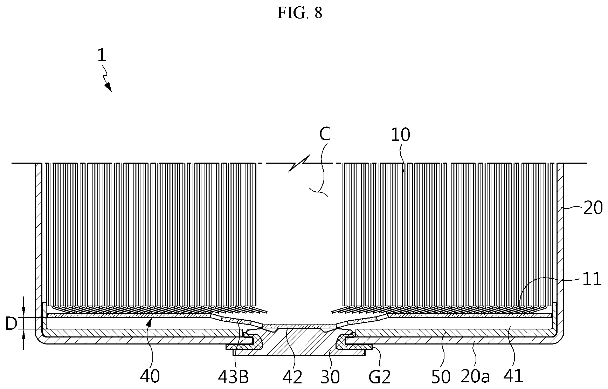

FIG. 8 is a view for describing a shape in which a current collector 40 according to one embodiment of the present disclosure is welded to an electrode assembly 10.

In this regard, in the case of a conventional cylindrical battery, axial height deviations of the electrode assembly 10 may cause a gap between the current collector 40 and the cell terminal 30. When the current collector 40 and the cell terminal 30 are welded in this state of causing the gap, the current collector 40 is pressed to generate stress in the welded portion. Eventually, there is a concern about damage to the welded portion due to this stress.

However, according to the configuration in which a plurality of slits S are provided in the current collector 40 of the present disclosure as shown in FIG. 8, damage to the welded portion between the current collector 40 and the cell terminal 30 may be effectively prevented. Specifically, according to the above configuration, even if axial height deviations of the electrode assembly 10 cause a gap between the current collector 40 and the cell terminal 30, the bridge portion 43B provided between the slits S may be elongated in the winding axis direction. More specifically, the path from the terminal coupling part 42 to the first uncoated portion coupling part 41 is in the horizontal direction, that is, X and Y with two sleeve gaps, so that when the terminal coupling part 42 moves in the total upward direction, the bridge portion 43B is bent in two directions, making it possible to secure the total upward fluidity.

Accordingly, the gap between the current collector 40 and the cell terminal 30 may be compensated. Therefore, according to the present disclosure, the stress generated in the welded portion between the current collector 40 and the cell terminal 30 may be reduced by dispersing the stress that may have been generated due to the pressing of the current collector conventionally. Additionally, the tensile force generated by the gap may be effectively reduced. Additionally, according to this structure, breakage during elongation of the current collector 40 may be prevented without a separate structure. That is, the current collector 40 composed of a single plate may be effectively elongated without breakage. Furthermore, according to the present disclosure, the production cost may be lowered and the production process may be simplified in the process of producing the current collector 40.

Meanwhile, referring to FIG. 8 again, the insulator 50 may block electrical connection between the first uncoated portion 11 and the battery housing 20. The insulator 50 may be interposed between the inner surface of the battery housing 20 facing the current collector 40 and the current collector 40. For example, the insulator 50 may be provided between the current collector 40 coupled to one side of the electrode assembly 10 and the inner surface of the battery housing 20. Specifically, it may be provided between the current collector 40 coupled to one side of the electrode assembly 10 and the inner surface of the closed portion of the battery housing 20. The insulator 50 prevents contact between the current collector 40 and the battery housing 20. That is, the insulator 50 is accommodated inside the battery housing 20, covers at least a part of the electrode assembly 10, and is configured to block electrical connection between the first uncoated portion 11 and the battery housing 20. Therefore, the insulator 50 may be made of a material having insulating performance. For example, the insulator 50 may include an insulating polymer material.

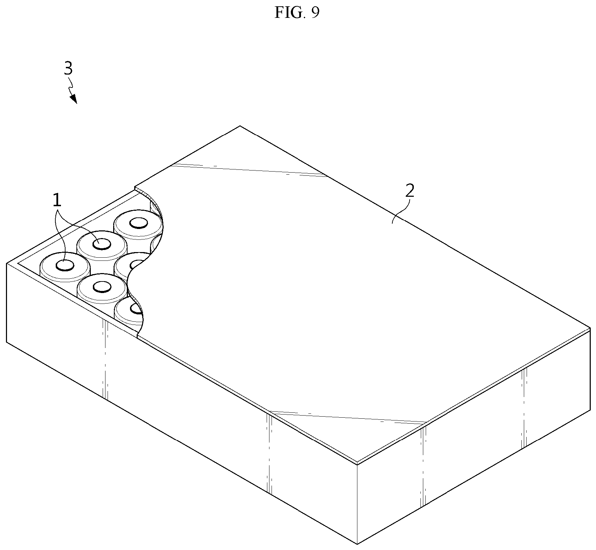

FIG. 9 is a view for describing a battery pack including a battery cell 1 according to one embodiment of the present disclosure.

Referring to FIG. 9, a battery pack 3 according to one embodiment of the present disclosure includes a battery assembly in which a plurality of battery cells 1 according to one embodiment of the present disclosure as described above are electrically connected and a pack housing 2 accommodating the same. In the drawings of the present disclosure, components such as a busbar for electrical connection, a cooling unit, a power terminal, and the like are omitted for convenience of illustration. Additionally, the battery pack 3 may further include various components, for example, components of a battery pack 3 known at the time of filing of the present disclosure, such as a BMS, a pack case, a relay, a current sensor, and the like.

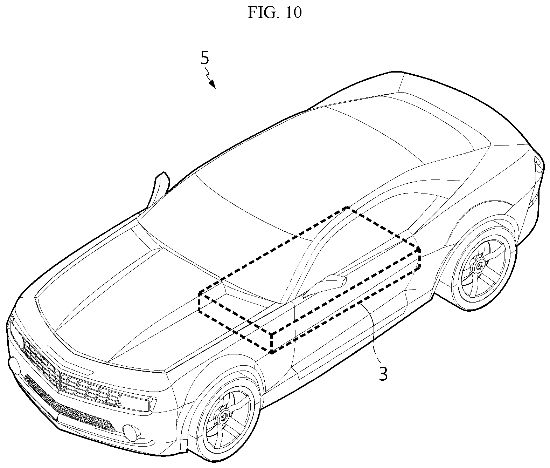

FIG. 10 is a view for describing a vehicle including the battery pack 3 of FIG. 9.

Referring to FIG. 10, a vehicle 5 according to one embodiment of the present disclosure may be, for example, an electric vehicle, a hybrid vehicle, or a plug-in hybrid vehicle, and includes a battery pack 3 according to one embodiment of the present disclosure. The vehicle 5 includes a four-wheeled vehicle and a two-wheeled vehicle. The vehicle 5 operates by receiving power from the battery pack 3 according to one embodiment of the present disclosure. Additionally, the vehicle 5 according to the present disclosure may further include various other components included in the vehicle in addition to this battery cell 1 or battery pack 3. For example, the vehicle 5 according to the present disclosure may further include a vehicle body, a motor, a control device such as an electronic control unit (ECU), and the like in addition to the battery cell 1 according to the present disclosure.

Meanwhile, the terms indicating directions as used herein such as upper and lower are used for convenience of description only, and it is obvious to those having ordinary skill in the art that the terms may change depending on the position of the stated element or an observer.

The present disclosure has been described hereinabove with reference to a limited number of embodiments and drawings, but the present disclosure is not limited thereto and it is obvious that a variety of modifications and variations may be made thereto by those having ordinary skill in the technical field pertaining to the present disclosure within the technical aspect of the present disclosure and the scope of the appended claims and their equivalents.

### [Explanation of Reference Signs]

5**:** vehicle
3: battery pack
2: pack housing
1: battery cell
10: electrode assembly
11: first uncoated portion
11a: segmented piece
12: second uncoated portion
C: winding center
20: battery housing
20a: outer surface
30: cell terminal
G2: insulating gasket
40: current collector
41: first uncoated portion coupling part
42: terminal coupling part
43: connection area
43B: bridge portion
S: slit
S1: first slit
S2: second slit
S3: third slit
L1: first line
L2: second line
C1: first concentric circle
C2: second concentric circle
C3: third concentric circle

## Claims

1. A battery cell comprising:
an electrode assembly in which a first electrode, a second electrode, and a separator interposed therebetween are wound around a winding axis to define a core and an outer circumferential surface, wherein the first electrode comprises a first uncoated portion that is not coated with an active material layer at a long side end along the winding direction and is exposed to the outside of the separator, and at least a part of the first uncoated portion is used as an electrode tab in itself;
a battery housing comprising an opening on one side and configured to accommodate the electrode assembly through the opening;
a cell terminal configured to pass through a surface positioned on an opposite side of the opening of the battery housing; and
a current collector comprising a first uncoated portion coupling part disposed on one side of the electrode assembly and configured to be welded to the first uncoated portion, a terminal coupling part spaced apart from the first uncoated portion coupling part and configured to be welded to the cell terminal, and a connection area provided between the first uncoated portion coupling part and the terminal coupling part, wherein the connection area comprises a plurality of slits spaced apart at regular intervals in the circumferential direction and having a convex shape toward an inner side in the radial direction.

2. The battery cell according to claim 1,
wherein the first uncoated portion coupling part is configured to be spaced apart at regular intervals along the circumferential direction.

3. The battery cell according to claim 1,
wherein the first uncoated portion coupling part forms a ring-shaped area having a predetermined thickness.

4. The battery cell according to claim 1,
wherein the slit comprises:
a first line extending from one end toward the terminal coupling part; and
a second line extending from the first line toward the first uncoated portion coupling part.

5. The battery cell according to claim 4,
wherein the slit is configured to change its extension direction at a point where the first line and the second line meet.

6. The battery cell according to claim 4,
wherein the slit has a convex shape toward an inner side in the radial direction at the point where the first line and the second line meet.

7. The battery cell according to claim 4,
wherein one end of the slit passes through an imaginary first concentric circle centered on the center of the current collector.

8. The battery cell according to claim 7,
wherein the point where the first line and the second line meet passes through an imaginary second concentric circle centered on the center of the current collector and having a smaller radius than the first concentric circle.

9. The battery cell according to claim 7,
wherein the other end of the slit passes through an imaginary third concentric circle centered on the center of the current collector and having a larger radius than the first concentric circle.

10. The battery cell according to claim 7,
wherein the first concentric circle is configured to coincide with a boundary point of the terminal coupling part and the connection area.

11. The battery cell according to claim 9,
wherein the third concentric circle is configured to coincide with a boundary point of the first uncoated portion coupling part and the connection area.

12. The battery cell according to claim 1,
wherein the connection area comprises a first slit and a second slit spaced apart from the first slit by a predetermined distance, and comprises a bridge portion provided in an area between the first slit and the second slit.

13. A battery pack comprising:
a battery cell according to any one of claims 1 to 12; and
a pack housing accommodating the plurality of battery cells.

14. A vehicle comprising a battery pack according to claim 13.

15. A current collector, which is applied to a battery cell comprising an electrode assembly having a first uncoated portion and a second uncoated portion, a battery housing accommodating the electrode assembly through an opening formed on one side and electrically connected to the second uncoated portion, and a cell terminal electrically connected to the first uncoated portion, the current collector comprising:
a first uncoated portion coupling part disposed on one side of the electrode assembly and configured to be welded to the first uncoated portion;
a terminal coupling part spaced apart from the first uncoated portion coupling part and configured to be welded to the cell terminal; and
a connection area provided between the first uncoated portion coupling part and the terminal coupling part, wherein the connection area comprises a plurality of slits spaced apart at regular intervals in the circumferential direction and having a convex shape toward an inner side in the radial direction.
